Europäisches Patentamt

**European Patent Office**

**Office européen des brevets**

(19)

(11) Publication number: **0 065 663**

**A1**

(12) **EUROPEAN PATENT APPLICATION**

(21) Application number: **82103656.3**

(22) Date of filing: **29.04.82**

(51) Int. Cl.³: **A 23 J 3/00**

(30) Priority: **11.05.81 US 262118**

(43) Date of publication of application:
**01.12.82 Bulletin 82/48**

(84) Designated Contracting States:
**AT BE CH DE FR GB IT LI LU NL SE**

(71) Applicant: **MILES LABORATORIES INC.**
**1127 Myrtle Street**
**Elkhart Indiana 46514(US)**

(72) Inventor: **Chiang, John Paichun**
**23568 River Manor**
**Elkhart, IN 46514(US)**

(72) Inventor: **Illingworth-Asmus, Barbara Lee**
**c/o Continental Lab. P.O. Box 75370**
**Oklahoma City, Oklahoma 73147(US)**

(72) Inventor: **Sternberg, Moshe M.**
**5825 Chelton Drive**
**Oakland, CA 94611(US)**

(74) Representative: **Adrian, Albert, Dr. et al,**
**BAYER AG c/o Zentralbereich Patente Marken und**
**Lizenzen**
**D-5090 Leverkusen 1, Bayerwerk(DE)**

(54) **Method for the preparation of a protein hydrolyzate from whey protein.**

(57) Disclosed is a process for the preparation of a protein hydrolyzate suitable for use in an enteric diet. The method involves the enzymatic hydrolysis of whey protein (particularly lactalbumin) using foodgrade fungal protease produced by an organism of the species *Aspergillus oryzae*.

EP 0 065 663 A1

- 1 -

# METHOD FOR THE PREPARATION OF A
## PROTEIN HYDROLYZATE FROM WHEY PROTEIN

### BACKGROUND OF THE INVENTION

Enteric diets, i.e., those diets which comprise nutrients which are designed to pass through the stomach unaltered and be absorbed by the intestines, are necessitated by various disorders. A suitable enteric material must, of course, contain amino acids to provide complete nutrition.

It does not seem necessary that an elemental enteric diet contain only amino acids. Rather, recent evidence suggests that peptides 2-3 units long are absorbed even more readily than the individual amino acids in some cases. The original theory of protein absorption was that small peptides liberated by the pancreatic proteases were hydrolyzed to their constituent amino acids by brush border peptidases. These amino acids are then transported across the cell membrane by an active transport system coupled to the sodium pump. It now appears that in addition to this there is a mechanism specific for the uptake of small peptides. Di- and tri-peptides are actively transported against concentration gradients by a common mechanism and are later hydrolyzed by MS-1177 cytoplasmic peptidases. Longer peptides are hydrolyzed at the brush border membrane with absorption of the resultant amino acids or di- to tri- peptides. The rates of absorption of peptides are frequently faster than those of the free amino acids, and the peptides are absorbed well in the proximal and distal small intestine, while free amino acids are absorbed most readily in the proximal region.

There is also evidence that peptide diets may be useful in the treatment of amino acid absorption diseases. In Hartnupp's disease, transport of neutral amino acids is diminished but the transport of peptides is unaffected. In cystinuria, small intestinal absorption of cysteine, ornithine, arginine and lysine are diminished but again the absorption of amino acids is normal if they are administered as di- and tri-peptides. In Lowe's syndrome, there is a decrease in all amino acid transport although peptide transport is not affected. In fact, there is no evidence of a primary peptidase deficiency or a peptide transport deficiency analagous to that of amino acids.

Malabsorption of amino acids is associated with many small intestinal disorders whereas dipeptide absorption is less severely affected. In tropical and celiac sprue, absorption of free amino acids is reduced while dipeptide absorption is fairly normal. In jejuniolestomy for obesity, a reduction of the absorption of free amino acid leucine occurs without any reduction in the absorption of the dipeptide glycyl-leucine.

Diets of free amino acids are hyperosmotic as compared to peptide diets and it has been shown that a peptide diet causes less fluid secretion into the small intestine than an equal nitrogen content amino acid diet.

MS-1177

- 3 -

In view of the above discussion, it is apparent that an elemental enteric diet containing amino acids and peptides would be preferable to one containing only amino acids. Optimally the peptides should contain from 2 to 3 amino acid residue. groups. While the optimal 2 to 3 group peptide may not be achievable on a commercial scale at a reasonable cost, a material containing a substantial amount of di- and tri- peptides along with some amino acids and higher molecular weight polypeptides is suitable for use in an enteric diet. The di- and tri- peptides would be transported intact, whereas, the tetra-, penta and hexa- peptides would be hydrolyzed by primary brush border peptidases and the resulting di- and tri- peptides transported across the cell membrane. · Amino acids would be absorbed in some cases and excreted in others, depending on the malady involved. Higher molecular weight polypeptides would be excreted. Thus, a protein hydrolyzate suitable for use in an enteric diet will desirably contain at least 50 weight percent of a combination of amino acids, di- peptides and tri- peptides and not more than 25 weight percent of polypeptides containing 10 or more amino acids.

Amino acids and peptides used in elemental enteric diets may be prepared by the enzymatic hydrolysis of a protein source material. In view of the above discussion, it can be seen that control of the molecular weight distribution of a protein hydrolyzate for use in such a diet is essential.

The flavor of its protein hydrolyzate is also a major factor in the success of an elemental enteric diet. Thus, it is desirable not only to produce a protein hydrolyzate with the proper molecular weight distribution but also one with a bland flavor. The protein source can have a major effect on the

MS-1177

flavor of a hydrolyzate produced from it. Legumes such as soybeans are notorious for their bitter, grassy, burnt, catty and fusel notes. Many of the compounds responsible for these flavors (long chain alcohols, ketones and aldehydes) are compounds of the raw bean and decrease on heating, but new ones develop. Further processing is necessary to remove these materials.

Fish protein concentrates also present problems. Fish protein is usually contaminated with 1°, 2° and 3° amines which contribute significantly to its characteristic flavor. In addition, fish muscle contains from 1-16% fat which is polyunsaturated. These lipids are difficult to extract and are readily oxidized by air or lipoxygenases and esterases (present in the fish flesh) to objectionably flavored compounds. The protein hydrolyzate itself presents a flavor problem since many amino acids, especially the more hydrophobic ones, are themselves bitter. Although the particular enzyme applied in the hydrolysis exerts some effect on the level of bitterness, the protein itself is also a factor.

It is also required that the protein hydrolyzate have a protein efficiency ratio (PER) at least equal to that of whole egg, i.e., at least 2.5. For this reason, and because of its bland flavor, we prefer to use whey protein (PER of 3.0) as the starting material for our hydrolyzate. In the production of cheese, milk solid, i.e., casein, is precipitated from milk either by acid precipitation or enzymatic coagulation leaving a liquid phase containing whey proteins. The solid whey protein can be recovered by various techniques such as heat precipitation, reverse osmosis, gel filtration and electrodialysis. We prefer to use a whey protein obtained by heat precipitation (lactalbumin).

MS-1177

- 5 -

Lactose, which is a contaminant of most whey proteins is not digested by a large proportion of the population and is a common cause of gastrointestinal complaints. Therefore, it must be present only in very low levels, if at all, in the hydrolyzate. The amount of lactose that produces symptoms has been investigated, and based on the investigations it can be concluded that whey protein used as the starting material for a protein hydrolyzate should contain a level of lactose such that the hydrolyzate produced from it will contain no greater than 1.0 weight percent of the sugar.

## SUMMARY OF THE INVENTION

The present invention is a method for the preparation of a protein hydrolyzate suitable, both in terms of molecular weight profile and flavor, for use in products to be consumed by individuals on an enteric diet. The method comprises the steps of:

a) providing whey protein having a lactose level sufficiently low to provide a protein hydrolyzate containing no more than 1.0 weight percent of this sugar;

b) forming an aqueous slurry of the whey protein;

c) adding foodgrade neutral fungal protease from Aspergillus oryzae to the slurry in an amount of from about 18.9 to 189 spectrophotometric hemoglobin units per gram of whey protein;

d) maintaining the pH and temperature of the slurry containing the protease at a level of from about pH 3.0 to about 10.0 and from about 40° C. to about 70° C. for a time sufficient to hydrolyze the whey protein into a hydrolyzate containing at least 50 weight percent of a combination of amino

MS-1177

acids, di-peptides and tri-peptides and not more than 25 weight percent of polypeptides containing 10 or more amino acids;

e) heating the slurry to a temperature and for a time sufficient to inactivate the enzyme;

f) removing remaining solid material from the slurry to provide an aqueous solution containing the desired protein hydrolyzate; and

g) recovering the protein hydrolyzate from the solution.

## DETAILED DESCRIPTION

The first step of this method involves the procurement of low lactose whey protein. Since we prefer to use lactalbumin as the protein source, the following discussion will be directed to the use of this particular whey protein. The lactose level of lactalbumin can be minimized by washing the sugar from the heat precipitated curd either before or after it is dried. When lactalbumin prepared in this manner is unavailable, lactose can be removed by hydrolysis with lactase.

Experiments involving the formation of hydrolyzates from enzymatically hydrolyzed lactalbumin were carried out using the following enzymes:

1. Fungal protease; obtained by controlled fermentation of Aspergillus oryzae var. The enzyme preparation contains a mixture of acid neutral and alkaline proteases exhibiting activity from pH 3.0 to 10.0 but having a maximum at pH 9.0. The preparation exhibits proteolytic activity to 70° C., but has a maximum at 55° C. In the examples, we used an enzyme preparation -- Takamine Brand Fungal Protease -- from Miles

MS-1177

Laboratories, Inc. which had an activity of 3,780 Spectrophotometric Hemoglobin Units (SHU) per gram. One SHU is that activity which will liberate one micromole of tyrosine per minute under the conditions of the assay according to the approved methods of the American Association of Cereal Chemists, 1969; Proteolytic Activity - Spectrophotometric Method (AACC method 22-63); American Association of Cereal Chemists, St. Paul, Minnesota.

2. Bacterial protease; obtained by controlled fermentation of Bacillus licheniformis var. The enzyme preparation contains primarily endopeptidases and exhibits proteolytic activity from pH 3.0 to 9.0 with a maximum from 5.0 to 5.5. The enzyme preparation is active up to 70° C., with a maximum at 55° C. We used an enzyme preparation -- Alcalase 0.6L -- from Novo Industri A/S, Bagsvaerd, Denmark, having an activity of 628 SHU/gm.

3. HT Proteolytic concentrate, Papain 3,000 and Pancreatin 4NE, all produced by Miles Laboratories, Inc., were also tested under their optimal conditions.

All of the resulting protein hydrolyzates were evaluated for flavor, molecular weight distribution and amino acid profile. The fungal protease concentrate was judged as the preferred material for the production of lactalbumin hydrolyzate to be used in enteric diets. The other enzyme preparations failed primarily due to unpleasant product flavor and less desirable peptide size of the protein hydrolyzate.

Although the fungal protease concentrate was found to be the best protease preparation for lactalbumin hydrolysis in respect to flavor and peptide size, one drawback in using this enzyme was found to be a low hydrolyzate yield of about 40%. To increase the accessibility of substrate to enzyme, the lactalbumin slurry was subjected to acid (30 minutes boiling in 2% $H_2SO_4$ solution) or alkali (10 minutes boiling at pH 8.0) prior to enzymatic hydrolysis. The results of this experiment are set out in Table II.

TABLE II

Effect of Heat Treatment on Hydrolysis Yield

| Lactalbumin Treatment | Enzyme Level (% w/w) | Hydrolysis Conditions | Yield (%) | ApL* |
|---|---|---|---|---|
| Control | 1.0 | pH 7.0, 50° C, 7 hr. | 39.6 | 2.3 |
| Acid-Heating | 1.0 | pH 7.0, 50° C, 7 hr. | 28.8 | 3.2 |
| Alkali-Heating | 1.0 | pH 7.0, 50° C, 7 hr. | 58.2 | 2.4 |

* Average peptide length

The average peptide length is the ratio of amino nitrogen to total nitrogen. Amino nitrogen was determined by trinitrobenzene sulfonic acid (TNBS) according to the description of Adler Nissen (J. Ag. Food Chem., 27:1256, 1979). Total nitrogen was determined by the Kjeldahl method.

MS-1177

From Table II it can be determined that the alkali-heat treatment of lactalbumin rendered the protein more accessible to protease attack, thereby increasing the yield, without significantly affecting the average peptide length of the hydrolyzate.

Lactalbumin was screened into different particle sizes (50, 100 and 200 mesh) after being treated with alkali and hydrolyzed with 1% fungal protease concentrate for 7 hours at pH 7.0 and 50° C. The results are set out in Table III.

## TABLE III

### Effect of Particle Size on Hydrolysis Yield

| Particle Size (Mesh) | Yield (%) |
|---|---|
| 50 | 57.3 |
| 100 | 58.7 |
| 200 | 55.8 |

From Table III it can be determined that particle size of lactalbumin does not significantly affect the degree of hydrolysis.

Sensory evaluation of lactalbumin hydrolyzates prepared with various enzymes showed that 1% fungal protease or 1% fungal proetase combined with 1% Alcalase yielded the product having the least flavor. Hydrolyzates prepared with 10% Alcalase were extremely bitter, especially when digested under alkali conditions. Two percent (2%) Pancreatin 4NE also produced bitter hydrolyzates, intermediate between fungal

MS-1177

protease and Alcalase. Ten percent (10%) Alcalase or a combination of 1% fungal protease with 10% Alcalase was extremely bitter. Miles Laboratories, Inc. HT Proteolytic concentrate and Papain 3,000 also produced a bitter hydrolyzate. Depending on the various reaction conditions such as temperature, pH and protease concentration, the hydrolysis is typically carried out for a period of 2 to 50 hours.

Using 1% fungal protease, hydrolyzates were prepared with different antimicrobial agents (200 ppm sulfite or 1% toluene). Neither of these samples were significantly different in flavor from the control. During the alkaline heating step and the hydrolysis reaction, a base is added for pH control. We prefer to use a base other than NaOH in order to keep the sodium content low. $Ca(OH)_2$ is the preferred base and no difference in flavor was noted when either NaOH or $Ca(OH)_2$ was used for pH control.

The method of practicing the method is further illustrated by the following example:


EXAMPLE I

Lactalbumin (35 Kg obtained from New Zealand Dairy) was combined with 180 gallons of deionized water in a 200 gallon kettle equipped with a steam jacket to form a 5% (w/v) aqueous slurry. Approximately 18 liters of a 4% NaOH solution was added to raise the pH to 7.0 whereupon the temperature was increased to 60° C. and the slurry stirred for 15 minutes. The resultant was centrifuged using a Westfalia Separator (bowl speed 6500 RPM, Model 9AMRCO36) to provide 60 gallons of sludge and 130 gallons of supernatant containing about 0.5% solids which was discarded. An additional 130 gallons of

MS-1177

deionized water was added to the sludge to form a 5% (w/v) aqueous slurry which was adjusted to pH 7.0, stirred for 15 minutes at 60° C., centrifuged and separated as before to provide 60 gallons of lactalbumin sludge having a lactose level below 1.0 (w/w) based on the dry lactalbumin. An additional 30 gallons of deionized water was added to provide slurry containing about 10% (w/v) solids.

The lactalbumin slurry was adjusted to pH 8.0 by the addition of 4.6 liters of a 4% NaOH solution whereupon the slurry was heated to 90-95° C. for 10 minutes with stirring and then cooled to 50° C. With the pH of the slurry controlled at 7.0 by the addition of approximately 200 grams of lime in a 10% slurry, 300 grams (3780 SHU/gm.) of Miles fungal protease dissolved in 10 liters of water was added to the slurry. The slurry was maintained at 50° C. for 24 hours whereupon it was heated to 90° C. for 5 minutes, then cooled to 50° C. The cooled slurry may be clarified by either centrifugation or filtration with a commercially available filter aid. The clarified hydrolyzate may be mixed with the remaining ingredients of the enteric diet (i.e., carbohydrates, fat, vitamins and minerals) and then dried or dried first and then blended with the remaining ingredients. A hydrolyzate prepared according to the instructions of this example should have an average peptide length of 2.3. Lactose content of the lactalbumin hydrolyzate was measured using a Lactose Assay Kit from Boehringer Mannheim (Indianapolis, Indiana). In it, lactose is hydrolyzed to glucose and $\beta$-galactose in the presence of $\beta$-galactosidase and water. $\beta$-galactose is oxidized by nicotinamide adenine dinucleotide (NAD) to galactonic acid in the presence of the enzyme $\beta$-galactose dehydrogenase and

MS-1177

NAD is converted to NADH. The amount of NADH formed is stoichiometric with the amount of lactose. The increase in NADH is measured by means of its absorption at 334, 340 or 365 nm. The lactose level of the hydrolyzate prepared in this example was less than 0.5% (w/w) which means that the formulated diet will contain less than about 0.05% lactose.

## EXAMPLE II

The procedure of Example I was repeated except that after 7 hours of digestion with 1% fungal protease an additional 1% of enzyme was added and the digestion continued for an additional 7 hours to provide a protein hydrolyzate having an average peptide length of 2.3.

## EXAMPLE III

The procedure of Example II was repeated except that 1% Alcalase was added after 7 hours to provide a protein hydrolyzate having an average peptide length of 2.3.

## EXAMPLE IV

The molecular weight profiles of the hydrolyzates prepared in Examples I and II were determined by exclusion chromatography according to the method of Carnegie, Nature, 206:1128, 1965. The gel selected for this was Sephadex G-25, particle size 20-80μ. Column dimensions were 90 x 1.5 cm. and the solvent was phenol:acetic acid:water, 1:1:1, wt.:wt.: vol. A calibration curve was determined and elution volumes were calculated for amino acids to peptides of three units long, peptides from 4 to 9 amino acids long and peptides of 10 or

MS-1177

more amino acids.   Samples of hydrolyzate from Examples I and II were evaluated for molecular weight profile by determining the percent nitrogen present in those three fractions of the column eluent.   This method, which has a margin of error of ± 3% indicated that the molecular weight profile of the samples analyzed was 65% amino acids and di- and tripeptides; 20% polypeptides of 4 to 9 amino acids and 16% of polypeptides containing 10 or more amino acids.

**0065663**

- 14 -

WHAT IS CLAIMED IS:

1. A process for preparing a protein hydrolyzate suitable for use in products to be consumed by individuals on an enteric diet, which process comprises the steps of:

a) providing whey protein having a lactose level sufficiently low to provide a protein hydrolyzate containing no more than 1.0 weight percent of this sugar;

b) forming an aqueous slurry of the whey protein;

c) adding foodgrade neutral fungal protease from Aspergillus oryzae to the slurry in an amount of from about 18.9 to 189 Spectrophotometric Hemoglobin Units per gram of whey protein;

d) maintaining the pH and temperature of the slurry containing the protease at a level of from about pH 3.0 to about 10.0 and from about 40° C. to about 70° C. for a time sufficient to convert the whey protein into a hydrolyzate containing at least 50 weight percent of a combination of amino acids, di-peptides and tri-peptides and not more than 25 weight percent of polypeptides containing 10 or more amino acids;

e) heating the slurry to a temperature and for a time sufficient to inactivate the enzyme;

f) removing remaining solid material from the slurry to provide an aqueous solution containing the desired protein hydrolyzate; and

g) recovering the protein hydrolyzate from the solution.

2. The process of Claim 1 wherein the whey protein is lactalbumin.

MS-1177

3. The process of Claim 1 wherein the pH is about 9.0.

4. The process of Claim 1 wherein the temperature is about 55° C.

5. The process of Claim 1 wherein in addition to the fungal protease there is added to the slurry a bacterial protease obtained by the controlled fermentation of Bacillus licheniformis and the pH is maintained at a level of from 3.0 to 9.0.

6. The process of Claim 2 wherein the lactalbumin is heated in an alkaline solution prior to the enzymatic hydrolysis.

7. The process of Claim 1 wherein the enzymatic hydrolysis is carried out for a period of from 2 to 50 hours.

8. The process of Claim 1 wherein the pH of the slurry is controlled by the use of $Ca(OH)_2$.

MS-1177

**European Patent Office**

**EUROPEAN SEARCH REPORT**

Application number

EP 82 10 3656

## DOCUMENTS CONSIDERED TO BE RELEVANT

| Category | Citation of document with indication, where appropriate, of relevant passages | Relevant to claim |
|---|---|---|
| X | LU-A- 40 694 (HOWARD LLOYD)<br><br>* Claims 1,2,5; example 1 *<br><br>--- | 1,2,4,7 |
| A | US-A-3 761 353 (F.F. NOE, W.T. FAITH)<br>* Claims 1-3 *<br><br>----- | 1,5 |

**CLASSIFICATION OF THE APPLICATION (Int. Cl. 3)**

A 23 J 3/00

**TECHNICAL FIELDS SEARCHED (Int. Cl. 3)**

A 23 J

The present search report has been drawn up for all claims

| Place of search | Date of completion of the search | Examiner |
|---|---|---|
| THE HAGUE | 31-08-1982 | PEETERS J.C. |